# EUROPÄISCHE PATENTSCHRIFT

(11) **EP 1 176 117 B1**
(45) Veröffentlichungstag und Bekanntmachung des Hinweises auf die Patenterteilung: **26.09.2007**
(21) Anmeldenummer: 01118321.7
(22) Anmeldetag: 27.07.2001
(51) Int. Cl.: C01B 3/48

(54) **Brennstoffzellensystem**
Fuel cell system
Système de pile à combustible

(30) Priorität: 29.07.2000 DE 10037062
(43) Veröffentlichungstag der Anmeldung: 30.01.2002
(73) Patentinhaber: NuCellSys GmbH, 73230 Kirchheim/Teck-Nabern (DE)
(72) Erfinder: Anumu, Philip Atte, 75203 Königsbach-Stein (DE); Krüger, Axel, 73235 Weilheim (DE); Saling, Carlo, 72649 Wolfschlugen (DE); Wolfsteiner, Matthias, 73230 Kirchheim (DE)
(74) Vertreter: Finkele, Rolf

(56) Entgegenhaltungen:
- EP-A- 0 887 307
- US-A- 5 144 796

## Beschreibung

Die Erfindung betrifft ein Brennstoffzellensystem gemäß dem Oberbegriff des unabhängigen Anspruchs 1.

In der Kaltstartphase wird ein PEM-Brennstoffzellensystem in nicht optimalen Betriebszuständen betrieben, was besonders für die thermisch aufeinander abgestimmten Reaktionen im Gaserzeugungssystem nachteilig ist. Beim Starten muß das Gaserzeugungssystems jedoch auf Betriebstemperatur gebracht werden. Dabei kommt es beim Kaltstart zum Auskondensieren von Wasser bzw. von Wasser-/Methanolgemisch vor und in der Gasreinigungsstufe. Dies führt zur Benetzung der aktiven Katalysatoroberfläche im Reaktor und damit zu einer Verlängerung der Startzeit.

Aus der DE 197 27 588 A1 ist eine Vorrichtung und ein Verfahren zur Erzeugung eines wasserstoffreichen, kohlenmonoxidarmen Gases bekannt, wobei in einer Gaserzeugungsvorrichtung aus einem Wasser/Brennstoffgemisch durch katalytische Wasserdampfreformierung und/oder aus einem Sauerstoff/Brennstoffgemisch durch partielle Oxidation ein Wasserstoff und Kohlenmonoxid enthaltendes Produktgas erzeugt und in einer Gasreinigungsstufe der Kohlenmonoxidanteil im Produktgas durch selektive CO-Oxidation an einem Oxidationskatalysator reduziert wird. Es wird dort auch vorgeschlagen, zum Verbessern der Kaltstarteigenschaften während einer Startphase Sauerstoff zum zugeführten Brennstoff beizumischen und die Strömungsrichtung derart umzukehren, daß zuerst die Gasreinigungsstufe und erst anschließend die Gaserzeugungsvorrichtung durchströmt wird.

Die US 5,144,796 offenbart ein Katalysatorsystem zur Reinigung der Abgase eines von einem Verbrennungsmotor angetriebenen Fahrzeugs mit einem in einem Hauptströmungsweg der Abgase angeordneten Katalysatorträger. Um eine Überhitzung des Katalysators bei hohen Abgastemperaturen zu vermeiden, ist eine bimetallische Verschlussvorrichtung vorgesehen, die bei niedrigen Abgastemperaturen den Hauptströmungsweg freigibt und ein Durchströmen des Katalysatorträgers mit den Abgasen erlaubt. Bei hohen Abgastemperaturen verschließt die Verschlussvorrichtung dagegen den Hauptströmungsweg und leitet die heißen Abgase durch einen Bypass-Strömungsweg an dem Katalysatorträger vorbei.

Die EP 0 887 307 A1 betrifft eine Vorrichtung und ein Verfahren zum Starten einer Vorrichtung zur Erzeugung eines wasserstoffreichen Gases mit einem Gehäuse, in dem ein Reformer und eine Gasreinigungsstufe angeordnet sind. Über die Reaktorlauflänge sind ein Anschluss oder mehrere Dosierstellen zur Zufuhr eines sauerstoffhaltigen Gases vorgesehen und der Reformer und die Gasreinigungsstufe sind zur Einstellung vorgegebener Reaktionsraten derart ausgebildet, dass sich durch Kopplung der beiden Reaktionen ein vorgegebenes Temperaturniveau in der Vorrichtung selbständig einstellt.

Es ist die Aufgabe der Erfindung, ein Brennstoffzellensystem mit verbesserten Kaltstarteigenschaften zu schaffen.

Diese Aufgabe wird durch eine Vorrichtung mit den Merkmalen des Patentanspruchs 1 gelöst.

Erfindungsgemäß sind in einem Brennstoffzellensystem Strömungsumlenkmittel vorgesehen, um Strömungswege für ein Medium temperaturabhängig freizugeben oder abzusperren.

Mit dem erfindungsgemäßen Brennstoffzellensystem ergibt sich gegenüber dem Stand der Technik eine einfache Lösung ohne aufwendige zusätzliche Komponenten.

Weitere Vorteile und Ausgestaltungen der Erfindung gehen aus den weiteren Ansprüchen und der Beschreibung hervor.

Die Erfindung ist nachstehend anhand einer Zeichnung näher beschrieben, wobei die Figuren zeigen:
- Fig. 1: eine Prinzipdarstellung einer bevorzugten Vorrichtung bei niedrigen Temperaturen,
- Fig. 2: eine Prinzipdarstellung einer bevorzugten Vorrichtung bei Betriebstemperatur mit Strömungsaufteilung und
- Fig. 3: a, b, c, d ein erstes Bimetallelement in geschlossener (a) und geöffneter (b) Form und ein zweites Bimetallelement in geschlossener (c) und geöffneter (d) Form.

Die Erfindung eignet sich besonders für den Kaltstart von Vorrichtungen wie Gaserzeugungssystemen von

Brennstoffzellenanlagen mit Reaktoren, die erst ab einer bestimmten Starttemperatur funktionstüchtig sind. Besonders bevorzugt ist der Einsatz solcher erfindungsgemäßer Kaltstartreaktoren in Brennstoffzellensystemen bei katalytischen Brennereinheiten und Kohlenmonoxid-Entfernungseinheiten.

Im folgenden ist die Erfindung anhand einer CO-Oxidationsstufe in einem Brennstoffzellensystem dargestellt, soll aber nicht auf die dort verwendeten Brennmittel eingeschränkt sein und kann auch an anderer Stelle des Brennstoffzellensystems eingesetzt werden.

Eine übliche Vorrichtung zur Erzeugung eines wasserstoffreichen, kohlenmonoxidarmen Mediums weist eine Gaserzeugungsvorrichtung zur katalytischen Wasserdampfreformierung eines Wasserdampf/Brennstoffgemisches und/oder zur partiellen Oxidation eines Sauerstoff/Brennstoffgemisches auf. Weiterhin ist eine Gasreinigungsstufe zur Entfernung von Kohlenmonoxid aus dem Produktmedium der Gaserzeugungsvorrichtung mit Hilfe der selektiven CO-Oxidation vorgesehen. Die Reaktoren der Gaserzeugungsvorrichtung und der Gasreinigungsstufe weisen Zu-und Abführleitungen auf. Bevorzugt wird eine solche Vorrichtung in einem PEM-Brennstoffzellensystem verwendet. Der erfindungsgemäße Kaltstartreaktor kann in einer solchen Vorrichtung verwendet werden.

Beim Kaltstart eines Brennstoffzellensystems bzw. eines Gaserzeugungssystems, in dem durch Reformierung eines Brennmittels, z.B. Methanol, ein wasserstoffgasreiches Reformat für den Betrieb des Brennstoffzellensystems erzeugt wird, kann es zum Auskondensieren von Wasser bzw. Wasser/Methanolgemisch kommen, da bei Temperaturen unterhalb der Betriebstemperatur das Brennmittel nicht vollständig umgesetzt wird. Ebenso kann der Kohlenmonoxidanteil im Reformat unerwünscht hoch sein. Das Auskondensieren von Medien kann dazu führen, daß das System verstopft wird oder daß Katalysatoren von der Flüssigkeit benetzt und damit deaktiviert werden, so daß die eigentliche Startphase des Systems unnötig verlängert wird. Der unerwünscht hohe Kohlenmonoxidanteil kann die Katalysatoren von nachfolgenden Reaktoren oder auch der Brennstoffzelleneinheit selbst schädigen.

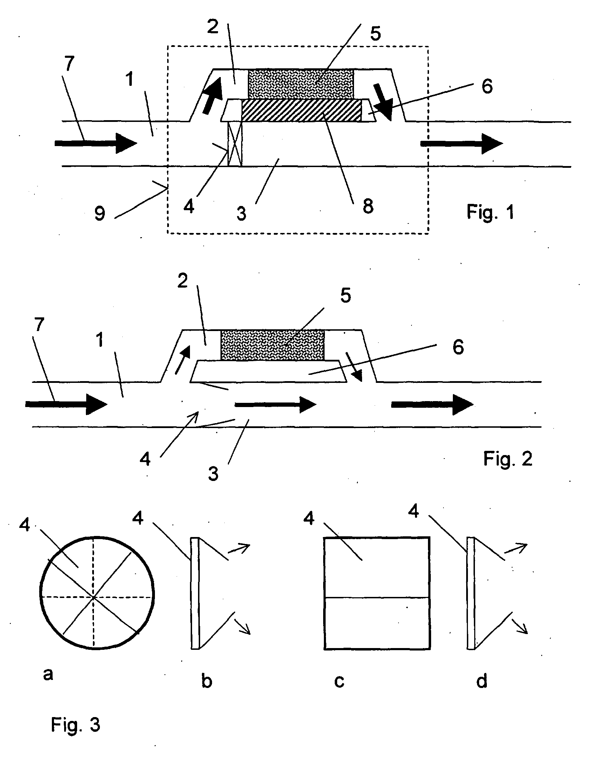

In Fig. 1 ist eine Prinzipdarstellung einer Anordnung gemäß der Erfindung dargestellt, wobei sich die Anordnung unterhalb einer vorgegebenen Temperatur T_{B} befindet. T_{B} entspricht vorzugsweise einer angestrebten Betriebstemperatur in der Gaserzeugungsvorrichtung und/oder der Gasreinigungsstufe.

In einem Hauptströmungsweg 1 strömt ein Medium, vorzugsweise das in einem Gaserzeugungssystem aus einem Brennstoff und/oder einem Wasserdampf/Brennstoffgemisch erzeugte wasserstoffgasreiche Medium 7. Bei Betriebstemperaturen besteht das Medium aus Wasserstoffgas mit möglichst geringem Kohlenmonoxidgehalt. Das Kohlenmonoxid wird in nachfolgenden Reinigungsstufen möglichst weitgehend entfernt. Unterhalb der Betriebstemperaturen der Gaserzeugungsvorrichtung kann das Medium 7 auch unerwünschte nicht umgesetzte Anteile des Brennstoffs und/oder Wasser/Brennstoffgemischs mit sich transportieren.

Der Hauptströmungsweg 1 verzweigt sich in einem bestimmten Bereich in einen ersten Strömungsweg 3 und einen dazu parallelen zweiten Strömungsweg 2 und wird dann stromab dieser Verzweigung wieder zum Hauptströmungsweg 1 zusammengeführt. Im Bereich der Verzweigung sind im zweiten Strömungsweg 2 Adsorbermittel 5 angeordnet. Die zwei getrennten Strömungswege 2, 3 sind der durch einen Hohlraum 6 beabstandet, in dem vorzugsweise Wärmeübertragermittel 8 angeordnet sind. Damit kann erreicht werden, daß die beiden Strömungswege eine möglichst homogene Temperatur aufweisen. Vorteilhaft ist auch, den gesamten Bereich der Adsorberstrecke mit den Adsorbermitteln 5 mit thermisch isolierenden Mitteln 9 zu versehen, um Wärmeverluste aus diesem Bereich zu minimieren. Zweckmäßigerweise werden der erste und der zweite Strömungsweg 3, 2 dann von den thermisch isolierenden Mitteln 9 umschlossen.

Im ersten Strömungsweg 3 ist ein Strömungsumlenkmittel 4 vorgesehen, so daß bei Temperaturen unterhalb der vorgegebenen Temperatur T_{B} der erste Strömungsweg 3 abgesperrt ist. Das Medium 7 strömt dann durch den zweiten Strömungsweg 2 und durch die Adsorbermittel 5. Bevorzugt sind die Adsorbermittel 5 geeignet, um auskondensierendes Wasser zu adsorbieren und/oder Kohlenmonoxid zu speichern. Es können auch mehrere Adsorber 5 hintereinander geschaltet vorgesehen sein, die jeweils unterschiedliche Materialien adsorbieren können.

Vorzugsweise ist die Vorrichtung stromab der Gaserzeugungsvorrichtung und stromauf einer Gasreinigungsstufe angeordnet. Ein bevorzugter Adsorber 5 ist ein Zeolith oder Aktivkohle.

Nach dem Start strömt zuerst kaltes Medium 7 durch eine kalte Anlage, wobei sich die Temperatur durch exotherme Reaktionen katalytischer Prozesse in vorgeschalteten Reaktoren und/oder zusätzlicher Temperiermaßnahmen erhöht. Ist die vorgegebene Temperatur T_{B} erreicht, wird der erste Strömungsweg 3 freigegeben. Der zweite Strömungsweg kann abgeschlossen werden, so daß das Medium 7 vollständig durch den ersten Strömungsweg 3 strömt.

In einer günstigen Weiterbildung der Erfindung kann zusätzlich im zweiten Strömungsweg stromauf oder stromab des Adsorberbereichs ein Strömungsumlenkmittel vorgesehen sein, welches bei niederen Temperaturen unterhalb von T_{B} den zweiten Strömungsweg 2 freigibt und ab T_{B} den zweiten Strömungsweg zumindest bereichsweise absperrt. Damit kann auf einfache Weise der Strömungswiderstand des zweiten Strömungswegs 2 eingestellt werden.

In einer bevorzugten Ausgestaltung der Erfindung kann das nunmehr heiße Medium 7 durch beide Strömungswege 2, 3 strömen. Dies ist in Fig. 2 dargestellt. Gleiche Elemente sind mit gleichen Bezugszeichen bezeichnet. Bedingt durch den Adsorber 5 und möglicherweise auch durch geeignet gewählte Querschnitte der beiden Strömungswege 2, 3 liegt im zweiten Strömungsweg ein großer Druckverlust vor, so daß nur eine geringe Medienmenge durch den zweiten Strömungsweg 2 und der Hauptteil des Mediums 7 durch den ersten Strömungsweg 3 strömt. Die geringe Medienmenge reicht aber aus, die Adsorbermittel 5 zu regenerieren, da jetzt kein oder nur wenig Kohlenmonoxid bzw. auskondensiertes Wasser oder Wasser/Methanolgemisch vorhanden ist. Die desorbierenden Adsorbate fallen wegen des geringen Durchsatzes des Mediums im zweiten Strömungsweg 2 über einen längeren Zeitraum mit nur geringer Konzentration im gesamten Medienstrom an, so daß diese den üblichen Betrieb von nachfolgend angeordneten Komponenten nicht stören. Somit ist ein kontinuierlicher Betrieb der Vorrichtung möglich und die Adsorbermittel 5 stehen nach dem Betrieb wieder für einen Kaltstart einsatzbereit zur Verfügung. Die Wärmeübertragermittel 8 können diesen Regenerierungsprozeß vorteilhaft unterstützen.
Bevorzugt ist das Strömungsumlenkmittel 4 ein Bimetallelement, welches durch temperaturabhängige Längenänderung den ersten Strömungsweg 3 zumindest mittelbar abdeckt oder freigibt. Die Strömungsumlenkung erfolgt passiv und wird nur über die Temperatur der Anordnung ausgelöst.

Ein günstiges zusätzliches Strömungsumlenkmittel im zweiten Strömungsweg 2 zeigt ein entsprechend gegenläufiges Temperaturverhalten. Bei niederen Temperaturen ist das

Bimetallelement so geformt, daß der zweite Strömungsweg 2 freigegeben ist, bei hohen Temperaturen sperrt das Bimetallelement den zweiten Strömungsweg 2. Dabei kann ein Querschnitt des zweiten Strömungswegs 2 offen bleiben, so daß der Strömungswiderstand des zweiten Strömungswegs 2 durch den Adsorber einerseits und das Strömungsumlenkmittel andererseits einstellbar ist.

In Fig. 3 sind zwei Arten von bevorzugten Bimetallelementen dargestellt, die im ersten und/oder zweiten Strömungsweg 3, 2 angeordnet sein können. Fig. 3a zeigt eine rundes Element 4, welches in Segmente unterteilt ist. Unterhalb der vorgegebenen Temperatur T_{B} sind die Segmente geschlossen. Bei höherer Temperatur bewegen sich die Segmente durch Verformung des Bimetalls so, daß der Querschnitt des Elements 4 freigegeben wird (Fig. 3b). Je größer die Zahl der Segmente, desto geringer ist der Druckverlust im Durchflußfall. Dieses Strömungsumlenkmittel 4 ist besonders für rohrförmige Strömungswege geeignet.

In Fig. 3c ist eine weitere Ausgestaltung des Strömungsumlenkmittels 4 dargestellt. Es besteht aus einem Rechteck, das in zwei rechteckige Segmente unterteilt ist. Dazu kann der erste Strömungsweg 3 zumindest im Bereich des Strömungsumlenkmittels 4 entsprechend rechteckig ausgestaltet sein. Bei oder oberhalb von T_{B} verformen sich die Segmente aus und öffnen so den ersten Strömungsweg 3.

Vorteilhaft ist, daß ein Bimetallelement aufgrund seiner thermischen Längenänderung durch Verformung einen Querschnitt freigeben oder absperren kann. Diese Verformung erfolgt passiv lediglich durch Temperaturänderung und ist im wesentlichen reversibel.

## Patentansprüche

1. Brennstoffzellensystem mit einer Gaserzeugungsvorrichtung zur katalytischen Wasserdampfreformierung eines Wasserdampf/Brennstoffgemisches und/oder zur partiellen Oxidation eines Sauerstoff/Brennstoffgemisches zur Erzeugung eines wasserstoffreichen Mediums, mit einer Gasreinigungsstufe zur Entfernung von Kohlenmonoxid aus dem Produktgas der Gaserzeugungsvorrichtung mit Hilfe der selektiven CO-Oxidation,
**dadurch gekennzeichnet,**
**daß** der Hauptströmungsweg (1) des Mediums (7) zumindest über eine Länge in einen ersten und einen zweiten parallelen Strömungsweg (3, 2) aufgespalten und anschließend wieder zusammengeführt ist, wobei zumindest im ersten Strömungsweg (3) ein Strömungsumlenkmittel (4) vorgesehen ist, um den ersten Strömungsweg (3) temperaturabhängig freizugeben oder abzusperren.

2. Brennstoffzellensystem nach Anspruch 1,
**dadurch gekennzeichnet,**
**daß** bei Temperaturen unterhalb einer vorgegebenen Temperatur (T_{B}) der erster Strömungsweg (3) abgesperrt und der zweite Strömungsweg (2) freigegeben ist und bei Temperaturen von mindestens der vorgegebenen Temperatur (T_{B}) zumindest der erste Strömungsweg (3) freigegeben ist.

3. Brennstoffzellensystem nach Anspruch 1,
**dadurch gekennzeichnet,**
**daß** der zweite Strömungsweg (2) ein zusätzliches Strömungsumlenkmittel aufweist, so daß bei Temperaturen unterhalb einer vorgegebenen Temperatur (T_{B}) der zweite Strömungsweg (2) freigegeben ist und bei Temperaturen von mindestens der vorgegebenen Temperatur (T_{B}) der Strömungswiderstand im zweiten Strömungsweg (3) durch Schließen des Strömungsumlenkmittels einstellbar ist.

4. Brennstoffzellensystem nach Anspruch 1,
**dadurch gekennzeichnet,**
**daß** der zweite Strömungsweg (2) einen Adsorber (5) aufweist.

5. Brennstoffzellensystem nach Anspruch 1,
**dadurch gekennzeichnet,**
**daß** der zweite Strömungsweg (2) hintereinander geschaltete Adsorber (5) für verschiedene Medien aufweist.

6. Brennstoffzellensystem nach Anspruch 4 oder 5,
**dadurch gekennzeichnet,**
**daß** der zweite Strömungsweg (2) einen Adsorber (5) für Wasser und/oder Kohlenmonoxid aufweist.

7. Brennstoffzellensystem nach Anspruch 4 oder 5,
**dadurch gekennzeichnet,**
**daß** der Adsorber (5) ein Zeolith ist.

8. Brennstoffzellensystem nach Anspruch 4 oder 5,
**dadurch gekennzeichnet,**
**daß** der Adsorber (5) Aktivkohle ist.

9. Brennstoffzellensystem nach Anspruch 1,
**dadurch gekennzeichnet,**
**daß** das Strömungsumlenkmittel (4) ein Bimetallelement ist, welches durch temperaturabhängige Verformung den ersten Strömungsweg (3) zumindest mittelbar abdeckt oder freigibt.

10. Brennstoffzellensystem nach Anspruch 1,
**dadurch gekennzeichnet,**
**daß** das Strömungsumlenkmittel im zweiten Strömungsweg (2) ein Bimetallelement ist, welches durch temperaturabhängige Verformung den zweiten Strömungsweg (2) zumindest mittelbar abdeckt oder freigibt.

11. Brennstoffzellensystem nach Anspruch 1,
**dadurch gekennzeichnet,**
**daß** der Hauptströmungsweg (1) im Bereich einer Adsorberstrecke (5) in zwei getrennte Strömungswege (2, 3) aufgeteilt ist, wobei im zweiten Strömungsweg (2) zumindest Adsorbermittel (5) und im ersten Strömungsweg (3) das Strömungsumlenkmittel (4) angeordnet sind, wobei der erste Strömungsweg (3) vom zweiten Strömungsweg (2) durch einen Hohlraum (6) beabstandet ist.

12. Brennstoffzellensystem nach Anspruch 11,
**dadurch gekennzeichnet,**
**daß** im Hohlraum (6) Wärmeübertragermittel (8) angeordnet sind.

13. Brennstoffzellensystem nach Anspruch 11,
**dadurch gekennzeichnet,**
**daß** im Bereich der Adsorberstrecke (5) thermisch isolierende Mittel (9) angeordnet sind.

14. Brennstoffzellensystem nach Anspruch 1,
**dadurch gekennzeichnet,**
**daß** das Strömungsumlenkmittel (4) zwischen der Gaserzeugungsvorrichtung und der Gasreinigungsstufe angeordnet ist.

15. Brennstoffzellensystem nach Anspruch 1,
**dadurch gekennzeichnet,**
**daß** das Strömungsumlenkmittel (4) stromab der Gasreinigungsstufe angeordnet ist.

## Claims

1. Fuel cell system having a gas production apparatus for catalytic water-vapour reformation of a water vapour/fuel mixture and/or for partial oxidation of an oxygen/fuel mixture in order to produce a hydrogen-rich medium, having a gas purification stage for removal of carbon monoxide from the product gas from the gas production apparatus with the aid of selective CO oxidation,
**characterized**
**in that** the main flow path (1) of the medium (7) is split at least over a length into a first and a second parallel flow path (3, 2), and is then joined together again, with a flow diversion means (4) being provided at least in the first flow path (3) in order to open or to block the first flow path (3) as a function of the temperature.

2. Fuel cell system according to Claim 1,
**characterized**
**in that**, at temperatures below a predetermined temperature (T_{B}), the first flow path (3) is blocked and the second flow path (2) is opened, and at temperatures of at least the predetermined temperature (T_{B}), at least the first flow path (3) is opened.

3. Fuel cell system according to Claim 1,
**characterized**
**in that** the second flow path (2) has an additional flow diversion means, such that the second flow path (2) is opened at temperatures below a predetermined temperature (T_{B}) and the flow resistance in the second flow path (3) can be adjusted by closing the flow diversion means at temperatures of at least the predetermined temperature (T_{B}).

4. Fuel cell system according to Claim 1,
**characterized**
**in that** the second flow path (2) has an adsorber (5).

5. Fuel cell system according to Claim 1,
**characterized**
**in that** the second flow path (2) has series-connected adsorbers (5) for different media.

6. Fuel cell system according to Claim 4 or 5,
**characterized**
**in that** the second flow path (2) has an adsorber (5) for water and/or carbon monoxide.

7. Fuel cell system according to Claim 4 or 5,
**characterized**
**in that** the adsorber (5) is a zeolite.

8. Fuel cell system according to Claim 4 or 5,
**characterized**
**in that** the adsorber (5) is activated charcoal.

9. Fuel cell system according to Claim 1,
**characterized**
**in that** the flow diversion means (4) is a bimetallic element which at least indirectly covers or opens the first flow path (3) by temperature-dependent deformation.

10. Fuel cell system according to Claim 1,
**characterized**
**in that** the flow diversion means in the second flow path (2) is a bimetallic element which at least indirectly covers or opens the second flow path (2) by temperature-dependent deformation.

11. Fuel cell system according to Claim 1,
**characterized**
**in that** the main flow path (1) is split into two separate flow paths (2, 3) in the area of an adsorber path (5), with at least adsorber means (5) being arranged in the second flow path (2) and the flow diversion means (4) being arranged in the first flow path (3), and with the first flow path (3) being separated from the second flow path (2) by a cavity (6).

12. Fuel cell system according to Claim 11,
**characterized**
**in that** heat exchanger means (8) are arranged in the cavity (6).

13. Fuel cell system according to Claim 11,
**characterized**
**in that** thermally insulating means (9) are arranged in the area of the adsorber path (5).

14. Fuel cell system according to Claim 1,
**characterized**
**in that** the flow diversion means (4) is arranged between the gas production apparatus and the gas purification stage.

15. Fuel cell system according to Claim 1,
**characterized**
**in that** the flow diversion means (4) is arranged downstream from the gas purification stage.

## Revendications

1. Système de pile à combustible comprenant un dispositif de génération de gaz pour la reformation de vapeur d'eau par voie catalytique d'un mélange de vapeur d'eau et de combustible et/ou pour l'oxydation partielle d'un mélange d'oxygène et de combustible pour produire un milieu riche en hydrogène, avec un étage de purification des gaz pour éliminer le monoxyde de carbone du gaz produit du dispositif de génération de gaz à l'aide de l'oxydation sélective de CO,
**caractérisé en ce que**
la voie d'écoulement principale (1) du milieu (7) est divisée au moins sur une longueur en une première voie d'écoulement et une deuxième voie d'écoulement parallèle (3, 2) et est ensuite à nouveau réunie, au moins un moyen de déviation de l'écoulement (4) étant prévu dans la première voie d'écoulement (3) pour ouvrir ou bloquer la première voie d'écoulement (3) en fonction de la température.

2. Système de pile à combustible selon la revendication 1,
**caractérisé en ce que**
pour des températures en dessous d'une température prédéfinie (T_{B}), la première voie d'écoulement (3) est bloquée et la deuxième voie d'écoulement (2) est ouverte et pour des températures d'au moins la température prédéfinie (T_{B}), au moins la première voie d'écoulement (3) est ouverte.

3. Système de pile à combustible selon la revendication 1,
**caractérisé en ce que**
la deuxième voie d'écoulement (2) présente un moyen de déviation de l'écoulement supplémentaire de sorte que pour des températures en dessous d'une température prédéfinie (T_{B}), la deuxième voie d'écoulement (2) soit ouverte et que pour des températures d'au moins la température prédéfinie (T_{B}), la résistance d'écoulement dans la deuxième voie d'écoulement (2) soit ajustable par fermeture du moyen de déviation de l'écoulement.

4. Système de pile à combustible selon la revendication 1,
**caractérisé en ce que**
la deuxième voie d'écoulement (2) présente un adsorbeur (5).

5. Système de pile à combustible selon la revendication 1,
**caractérisé en ce que**
la deuxième voie d'écoulement (2) présente des adsorbeurs (5) montés les uns derrière les autres pour différents milieux.

6. Système de pile à combustible selon la revendication 4 ou 5,
**caractérisé en ce que**
la deuxième voie d'écoulement (2) présente un adsorbeur (5) pour l'eau et/ou pour le monoxyde de carbone.

7. Système de pile à combustible selon la revendication 4 ou 5,
**caractérisé en ce que**
l'adsorbeur (5) est une zéolithe.

8. Système de pile à combustible selon la revendication 4 ou 5,
**caractérisé en ce que**
l'adsorbeur (5) est du charbon actif.

9. Système de pile à combustible selon la revendication 1,
**caractérisé en ce que**
le moyen de déviation de l'écoulement (4) est un élément bimétal, qui ouvre ou couvre au moins de manière indirecte la première voie d'écoulement (3) par déformation due à la température.

10. Système de pile à combustible selon la revendication 1,
**caractérisé en ce que**
le moyen de déviation de l'écoulement dans la deuxième voie d'écoulement (2) est un élément bimétal qui ouvre ou couvre au moins de manière indirecte la deuxième voie d'écoulement (2) par déformation due à la température.

11. Système de pile à combustible selon la revendication 1,
**caractérisé en ce que**
la voie d'écoulement principale (1) est divisée dans la région d'une section d'adsorbeur (5) en deux voies d'écoulement séparées (2, 3), au moins un moyen d'adsorbeur (5) étant disposé dans la deuxième voie d'écoulement (2) et le moyen de déviation de l'écoulement (4) étant disposé dans la première voie d'écoulement (3), la première voie d'écoulement (3) étant espacée de la deuxième voie d'écoulement (2) par un espace creux (6).

12. Système de pile à combustible selon la revendication 11,
**caractérisé en ce que**
des moyens de transfert thermique (8) sont disposés dans l'espace creux (6).

13. Système de pile à combustible selon la revendication 11,
**caractérisé en ce que**
des moyens d'isolation thermique (9) sont disposés dans la région de la section d'adsorbeur (5).

14. Système de pile à combustible selon la revendication 1,
**caractérisé en ce que**
le moyen de déviation de l'écoulement (4) est disposé entre le dispositif de génération de gaz et l'étage de purification des gaz.

15. Système de pile à combustible selon la revendication 1,
**caractérisé en ce que**
le moyen de déviation de l'écoulement (4) est disposé en aval de l'étage de purification des gaz.
